# EUROPEAN PATENT APPLICATION

(11) **EP 1 161 107 A1**
(43) Date of publication of application: **05.12.2001**
(21) Application number: 00900151.2
(22) Date of filing: 07.01.2000
(51) Int. Cl.: H04Q 7/28

(54) **CELL CHANGING DEVICE AND CELL CHANGING METHOD**

(71) Applicant: MITSUBISHI DENKI KABUSHIKI KAISHA, Tokyo 100-8310 (JP)
(72) Inventor: TSUKAMOTO, Katsumi, Mitsubishi Denki Kabushiki K., Tokyo 100-8310 (JP); YAMADA, Yoshiko,Mitsubishi Denki Kabushiki K., Tokyo 100-8310 (JP)
(74) Representative: Sajda, Wolf E., Dipl.-Phys.
(86) International application number: JP0000050
(87) International publication number: WO0150794

(57) **Abstract**

A time interval for measurement of field intensity with respect to base stations is controlled, taking into consideration an increasing or decreasing tendency of field intensity with respect to the base stations adjacent to a host station.

## Description

### Technical Field

The present invention relates to a cell switching device, and a cell switching method, for achieving low power consumption of a mobile station that moves while switching base stations for communication in a communication system comprising a mobile satellite communications network or a cellular communications network.

### Background Art

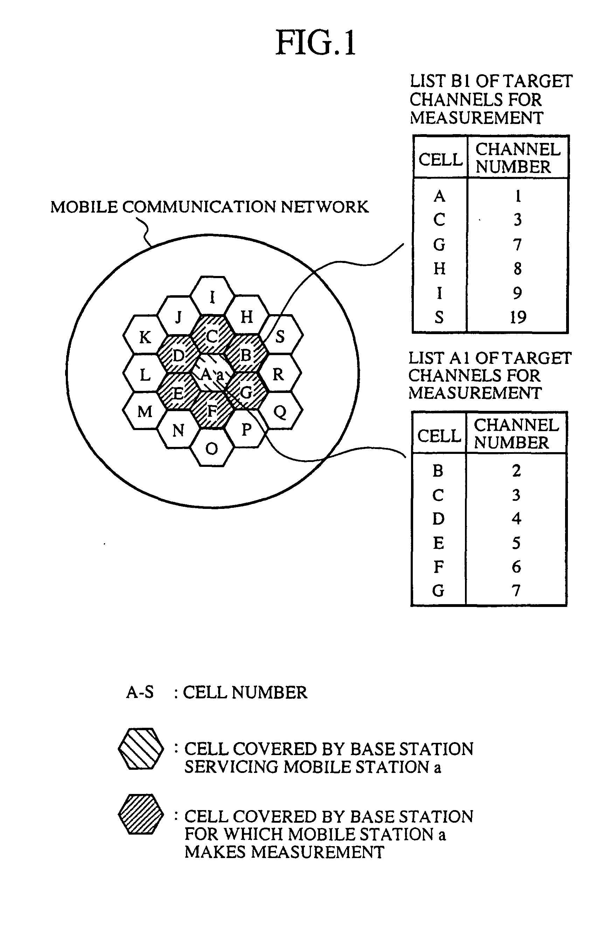

Fig. 1 is an explanatory diagram illustrating the operation of a conventional cell switching device, which is shown in Japanese Patent Laid-Open No. Hei 6-77888 for example. In other words, Fig. 1 shows a relation between a cell's location and a target channel for measurement in a wireless telephone system.

For example, a base station that covers a cell A stores a list A1 of target channel for measurement associated with cells B, C, D, E, F, and G that are adjacent to the cell A.

When the mobile station a enters an area of the cell A, the mobile station a receives list A1 from the base station that covers the cell A.

Thereafter, the mobile station a refers to the list A1, checks the channel numbers of the cell B, C, D, E, F, and G, successively measures the received field intensity of the channels at constant time intervals, and transmits results of the measurements to the base station that covers the cell A.

When the base station that covers the cell A receives the measurement results from the mobile station a, the base station determines a hand-over destination for the mobile station a according to the measurement results, and transmits a result of the determination to the mobile station a.

The mobile station a performs cell switching according to the result of the determination by the base station that covers the cell A.

A description will now be given of procedures for measuring the field intensity.

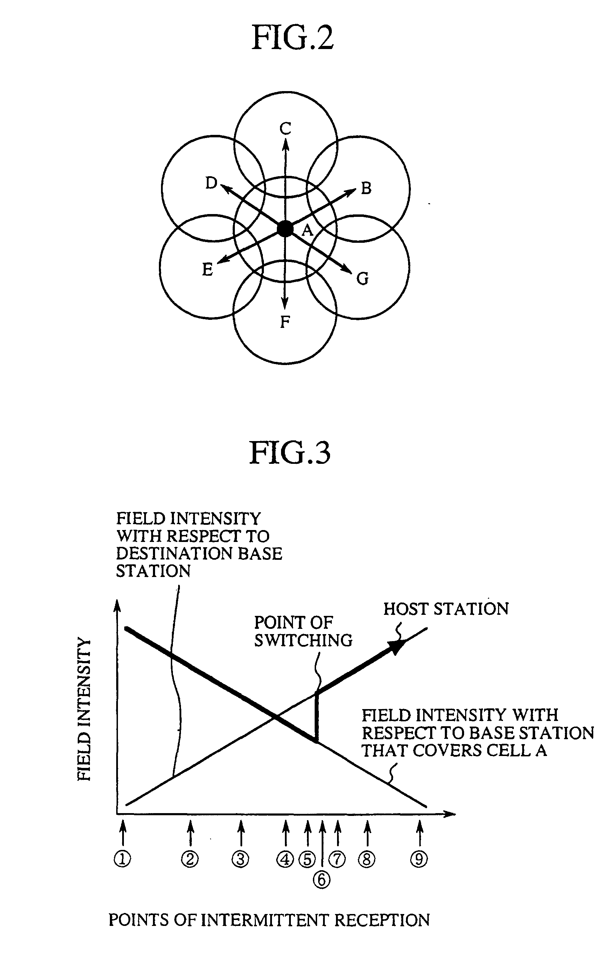

First of all, the mobile station a measures the field intensity with respect to the host base station that covers the cell A. Subsequently, the mobile station a measures the field intensity with respect to the base stations that cover the cells adjacent to the cell A. To be more specific, the mobile station a measures the field intensity with respect to the base stations that cover the cells B through G (see Fig. 2).

Then, when the measurement of the field intensity with respect to the base stations that cover the adjacent cells has been completed, the mobile station a measures the field intensity with respect to the host base station a second time. Thereafter, the mobile station a repeatedly performs the measurement of the field intensity with respect to the base stations that cover the cells adjacent to the cell A.
· Order of measurements = A → B → C → D → E → F → G → A → B → ···

In this manner, in the conventional example described above, the field intensity of the adjacent cells is measured at constant time intervals.

A cell switching device, which permits the time interval for field intensity measurement to be changed as shown in Fig. 3, is shown in Japanese Patent Laid-Open No. Hei 4-241528.

In the case of this prior art, at points of time ①to ⑨, not only the field intensity with respect to the host base station that covers the cell A, but also the field intensity with respect to the base stations that cover the adjacent cells B to G, is measured.

As shown in Fig. 3, when the field intensity with respect to the host base station decreases at the point of time ①, it is determined that the mobile station a is moving away from the center of the cell A. Accordingly, cell switching is required. Therefore, the time interval for field intensity measurement is reduced.

As a result, the field intensity measurement of the host station and the other stations (base stations that cover the cells from B to G) is repeated while reducing measurement time intervals between the points of time ② to ⑤. When the field intensity with respect to the host base station falls below a critically low level at the point of time ⑤, cell switching processing is performed so that the mobile station a is switched to the cell producing the strongest field intensity.

Thereafter, the base station that covers the switched cell is designated as host station. In Fig. 3, the field intensity of host station is indicated by a bold arrow.

When the field intensity of host station increases at the point of time ⑥, it is determined that the mobile station a is moving toward the center of the cell. Accordingly, cell switching is not required. Therefore, the time interval for field intensity measurement is extended.

The conventional cell switching device is configured as described above. Therefore, even when the time interval for field intensity measurement is changed according to the field intensity of the host station, no differentiation is made between the stations regarding the time interval for field intensity measurement. The same time interval is applied to a base station relatively going away and a base station approached by the mobile station a. However, because the base station receding with respect to the mobile station a cannot be used as the host station for the mobile station a, it is useless to frequently measure the field intensity of that base station. For this reason, the problem of inefficient power consumption has arisen.

The present invention has been made to solve the problem as described above, and aims to obtain a cell switching device and a cell switching method, which are capable of achieving low power consumption by performing efficient field intensity measurement of the base station.

### Disclosure of Invention

A cell switching device according to the invention comprises control means for controlling a time interval for field intensity measurement, in the measuring means, with respect to the base stations, taking into consideration an increasing or decreasing tendency of the field intensity with respect to the base stations measured by the measuring means.

Accordingly, the frequency of field intensity measurements with respect to base stations receding with respect to the mobile station is reduced. Therefore, an effect of achieving low power consumption is produced.

The control means may reduce the time interval for field intensity measurement with respect to a base station as the field intensity undergoes an increase, and extend the time interval for field intensity measurement with respect to the base station as the field intensity undergoes a decrease.

Accordingly, the frequency of field intensity measurements with respect to base stations receding with respect to the mobile station is reduced. Therefore, the measurement of field intensity with respect to the base stations is performed efficiently.

The control means may control the time interval for field intensity measurement with respect to the base stations, taking into consideration absolute values of field intensity with respect to the base stations.

Accordingly, the frequency of field intensity measurements with respect to base stations far-removed from the mobile station is reduced. Therefore, an effect of achieving low power consumption is produced.

The control means may reduce the time interval for field intensity measurement with respect to a base station as the absolute value of field intensity with respect to the base station becomes large.

Accordingly, the frequency of field intensity measurements with respect to base stations far-removed from the mobile station is reduced. Therefore, the measurement of field intensity with respect to the base stations is performed efficiently.

The control means may control the time interval for field intensity measurement with respect to a base station, taking into consideration a direction of movement of a satellite.

Accordingly, the frequency of field intensity measurements with respect to base stations receding with respect to the mobile station is reduced. Therefore, an effect of achieving low power consumption is produced.

The control means may be provided in the base station.

Accordingly, the base station can control the time interval for measurement of field intensity, taking into consideration the number of mobile stations in communication and the number of available lines.

A cell switching method according to the invention provides control of the time interval for measurement of field intensity with respect to the base stations, taking into consideration an increasing or decreasing tendency of field intensity with respect to the base stations.

Accordingly, the frequency of field intensity measurements with respect to base stations receding with respect to the mobile station is reduced. Therefore, an effect of achieving low power consumption is produced.

The time interval for field intensity measurement with respect to a base station may be reduced as the field intensity undergoes an increase, and the time interval for field intensity measurement with respect to the base station may be extended as the field intensity undergoes a decrease.

Accordingly, the frequency of field intensity measurements with respect to base stations receding with respect to the mobile station is reduced. Therefore, the measurement of field intensity with respect to the base stations is performed efficiently.

The time interval for field intensity measurement with respect to the base stations may be controlled, taking into consideration absolute values of the field intensity with respect to the base stations.

Accordingly, the frequency of field intensity measurements with respect to base stations far-removed from the mobile station is reduced. Therefore, an effect of achieving low power consumption is produced.

The time interval for field intensity measurement with respect to the base station may be reduced as the absolute value of field intensity becomes large.

Accordingly, the frequency of field intensity measurements with respect to base stations far-removed from the mobile station is reduced. Therefore, the measurement of field intensity with respect to the base stations is performed efficiently.

The time interval for field intensity measurement with respect to the base stations may be controlled, taking into consideration a direction of movement of a satellite.

Accordingly, the frequency of field intensity measurements with respect to base stations receding with respect to the mobile station is reduced. Therefore, an effect of achieving low power consumption is produced.

### Brief Description of Drawings

Fig. 1 is an explanatory diagram illustrating the operation of a conventional cell switching device.
Fig. 2 is an explanatory diagram illustrating a frequency of field intensity measurement.
Fig. 3 is an explanatory diagram illustrating the time interval for field intensity measurement.
Fig. 4 is a configuration diagram illustrating a cell switching device according to a first embodiment of the present invention.
Fig. 5 is a flowchart illustrating a cell switching method according to the first embodiment of the present invention.
Fig. 6 is an explanatory diagram illustrating a frequency of field intensity measurement.
Fig. 7 is an explanatory diagram illustrating the time interval for field intensity measurement.
Fig. 8 is an explanatory diagram illustrating the time interval for field intensity measurement.
Fig. 9 is an explanatory diagram illustrating the time interval for field intensity measurement.
Fig. 10 is an explanatory diagram illustrating the time interval for field intensity measurement.
Fig. 11 is a table diagram illustrating measurement time intervals corresponding to increasing or decreasing tendencies of the field-intensity and field-intensity absolute values.
Fig. 12 is an explanatory diagram illustrating a frequency of field intensity measurement.

### Best Method for Carrying out the Invention

For the purpose of describing the present invention in more detail, a best mode for embodying the invention will be described with reference to accompanying drawings.

### First Embodiment

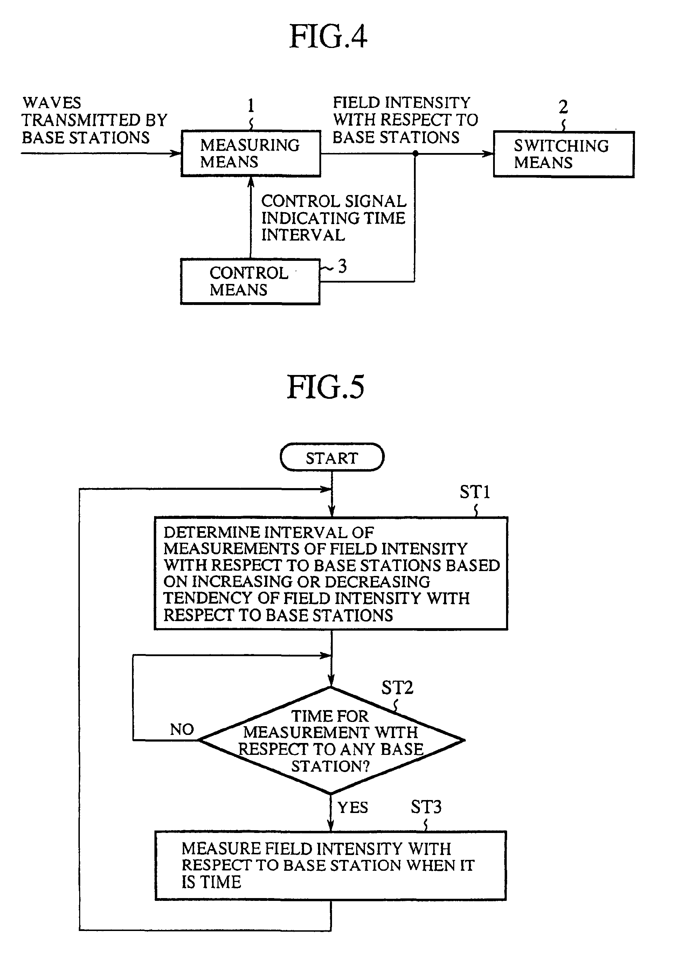

Fig. 4 is a configuration diagram illustrating a cell switching device according to a first embodiment of the present invention. In Fig. 4, reference numeral 1 indicates a measuring means for receiving radio waves transmitted from a plurality of base stations adjacent to a base station servicing the mobile station a and measuring the field intensity of the plurality of base stations. Reference numeral 2 indicates a switching means for referring to results of the measurements provided by the measurement means 1 and switching, when the field intensity of a base station exceeds a reference intensity, to that base station for communication with the mobile station a. Reference numeral 3 indicates a control means for controlling the time interval for field intensity measurement, in the measurement means 1, with respect to the base stations, taking into consideration an increasing or decreasing tendency of the field intensity and a field intensity absolute value with respect to the base stations measured by the measurement means 1.

Fig. 5 is a flowchart illustrating a cell switching method according to the first embodiment of the present invention.

A description will now be given of the operation according to the first embodiment.

In the prior art, time intervals for field intensity measurement with respect to the other stations are uniformly determined with reference to the field intensity of the host station. However, according to the first embodiment, the time interval for field intensity measurement with respect to each of the other stations is determined with reference to an increasing or decreasing tendency of the field intensity and the field intensity absolute value with respect to the other stations, instead of to the host station's field intensity.

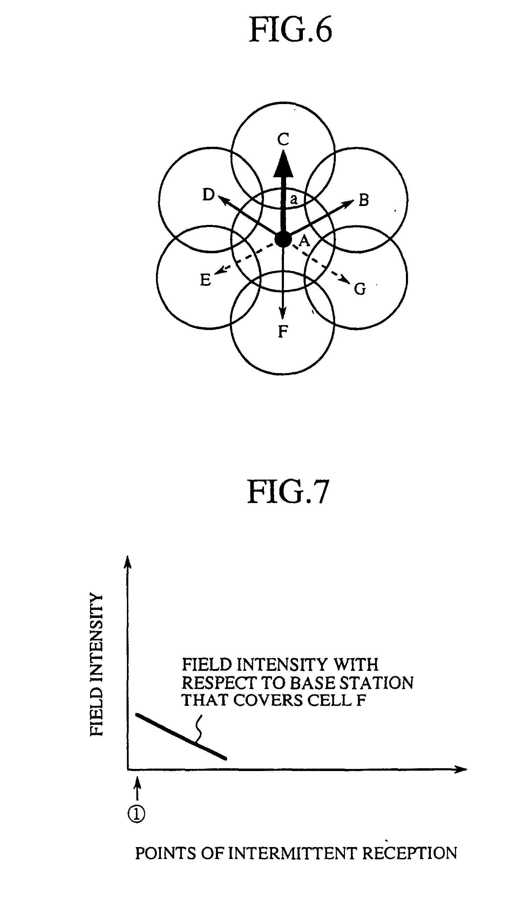

For example, as shown in Fig. 6, when the mobile station a located in a cell A moves toward a cell C, the field intensity of a base station that covers the cell C gradually increases.

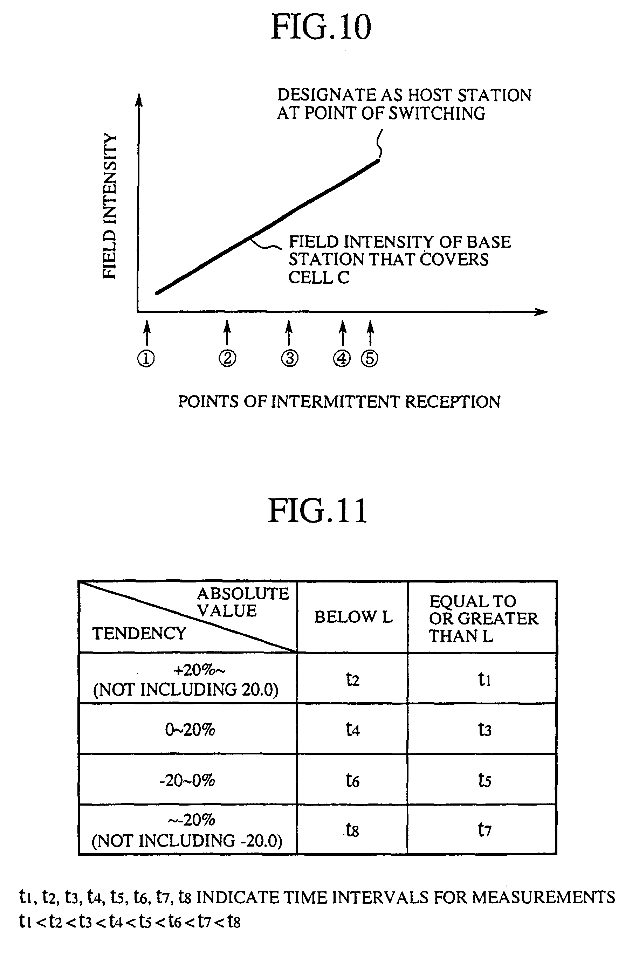

As shown in Fig. 10, when the field intensity of the base station that covers the cell C exceeds a reference intensity which is a predetermined threshold value, the switching means 2 is required to frequently measure the field intensity of the base station that covers the cell C, in order for the mobile station a to be switched to the base station that covers the cell C. The width of arrows shown in Fig. 6 expresses a frequency of field intensity measurement.

A base station receding with respect to the mobile station a (that is, a base station that covers a cell F) cannot be used as the host station for the mobile station a. Thus, it is not necessary to frequently measure the field intensity of the base station that covers the cell F. The field intensity with respect to the base station that covers the cell F becomes significantly low as shown in Fig. 7.

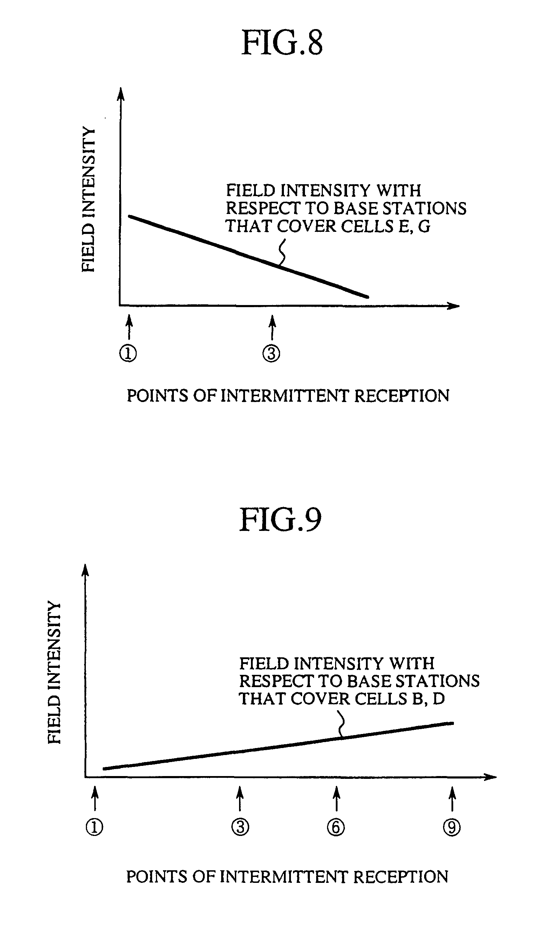

In addition, as shown in Fig. 8, the field intensity of base stations that cover cells E and G decreases although the field intensity is not lower than that of the base station that covers the cell F. Therefore, it is not necessary to measure the associated field intensity so frequently.

Moreover, as shown in Fig. 9, the field intensity with respect to base stations that cover cells B and D slightly increases as the mobile station a approaches. However, because the field intensity is not higher than that of the base station that covers the cell C, the associated field intensity is measured slightly more frequently.

To be more specific, in Figs. 7 though 10, at the point of time ①, the field intensity of base stations that cover adjacent cells B to G is measured, while at the point of time ②, according to results of the measurements, only the field intensity with respect to the base station that covers the cell C is measured.

Subsequently, at the point of time ③, not only the field intensity of the base station that covers the cell C but also the field intensity with respect to the base stations that cover the cells B, D, E, and G is measured, whereas at the points of time ④ and ⑤, only the field intensity of the base station that covers the cell C is measured.

Then, when the field intensity of the base station that covers the cell C exceeds the reference intensity, the base station that covers the cell C is used as the host station for the mobile station a as shown in Fig. 10. Thereafter, measurements of the field intensity of base stations that cover cells adjacent to the cell C are started.

When the control means 3 receives the measurement result from the measurement means 1, the control means 3 determines the time interval for field intensity measurement with respect to the base stations, based on an increasing or decreasing tendency of the field intensity and the field intensity absolute value with respect to the base stations (step ST1) and the switching means 2 measures the field intensity with respect to the base stations at the determined time intervals (steps ST2 and ST3). One specific method for determining the measurement time interval, is shown in Fig. 11. A table of measurement time intervals corresponding to an increasing or decreasing tendency of the field intensity and the field intensity absolute value with respect to the base stations is prepared so that the measurement time interval is determined with reference to the table.

For example, if the field intensity with respect to a certain base station increases by +15% as compared with the field intensity measured previously, and if an absolute value of the field intensity is greater than or equal to L, the time interval for field intensity measurement with respect to the base station in question is determined to be "t₃".

As disclosed in the above-mentioned description, according to the first embodiment, the time interval for field intensity measurement with respect to the base stations is controlled, taking into consideration an increasing or decreasing tendency of the field intensity and the field intensity absolute value with respect to the base stations. Therefore, the frequency of field intensity measurement is reduced for a base station receding with respect to the mobile station a, and for a base station located in the position that is far-removed from the mobile station a. As a result, an effect of achieving low power consumption is produced.

### Second Embodiment

The first embodiment described above ensures that the time interval for measurement is determined according to the field intensity with respect to the other stations. However, the time interval for field intensity measurement with respect to the base stations may be controlled, taking into consideration a direction of movement of a satellite.

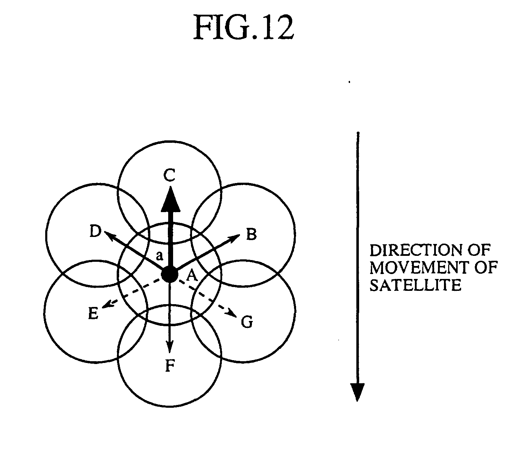

That is to say, as shown in Fig. 12, even when the mobile station a is stationary, the satellite may be moving toward a base station that covers the cell F so that the mobile station a is relatively approached by the cell C. In this case, the field intensity with respect to the base station that covers the cell C gradually increases.

As described above, when the field intensity with respect to the base station that covers the cell C exceeds a certain threshold value, it is necessary to switch to the base station that covers the cell C for communication with the mobile station a. Therefore, it is necessary to frequently measure the field intensity with respect to the base station that covers the cell C.

Since the base station that covers the cell F is receding with respect to the mobile station a, it is not necessary to measure the associated field intensity so frequently.

Therefore, information about the direction of movement of the satellite is received from the base station that covers the cell A, which is the host station. Taking that information into consideration, the time intervals for field intensity measurement with respect to the other stations are individually controlled.

Thus, the second embodiment provides an additional advantage for efficient performance of the field intensity measurement with respect to the base stations.

### Third Embodiment

The first and the second embodiments ensure that the mobile station a is provided with the control means 3, and that the time interval for field intensity measurement with respect to the base stations is determined in the mobile station a. However, the control means 3 may be included in the base stations.

In this case, it is necessary to transmit a result of the measurement produced by the measuring means 1 to a host base station and to transmit a result of the determination made by the control means 3 to the mobile station a. The host base station can control time intervals for field intensity measurement, taking into consideration the number of currently communicating mobile stations and the number of available lines. Therefore, for example, in a situation in which the host base station communicates with a large number of mobile stations, and in which the number of available lines is relatively small, the base station may be configured to promote earlier cell switching.

### Industrial Applicability

As described above, the cell switching device and the cell switching method according to the present invention are suitable for use in a terminal device such as a mobile phone. Power consumption in such a terminal device can be reduced by performing efficient field intensity measurement with respect to a plurality of base stations for determination of a destination of communication for a mobile station belonging to a wireless communication system comprising a satellite mobile communication network or a cellular communication network.

## Claims

1. A cell switching device **characterized by** comprising:
measuring means (1) for measuring a field intensity with respect to a plurality of base stations adjacent to a base station servicing a mobile station;
switching means (2) for referring to results of the measurements provided by said measuring means and switching, when the field intensity of a base station exceeds a reference intensity, to that base station for communication with the mobile station; and
control means (4) for controlling a time interval for field intensity measurement, in the measuring means, with respect to the base stations, taking into consideration an increasing or decreasing tendency of the field intensity with respect to the base stations measured by the measuring means.

2. The cell switching device according to claim 1, **characterized in that**:
said control means reduces the time interval for field intensity measurement with respect to a base station as the field intensity undergoes an increase, and extends the time interval for field intensity measurement with respect to the base station as the field intensity undergoes a decrease.

3. The cell switching device according to claim 1, **characterized in that**:
said control means controls the time interval for field intensity measurement with respect to the base stations, taking into consideration absolute values of field intensity with respect to the base stations.

4. The cell switching device according to claim 3, **characterized in that**:
said control means reduces the time interval for field intensity measurement with respect to a base station as the absolute value of field intensity with respect to the base station becomes large.

5. The cell switching device according to claim 1, **characterized in that**:
said control means controls the time interval for field intensity measurement with respect to a base station, taking into consideration a direction of movement of a satellite.

6. The cell switching device according to claim 1, **characterized in that**:
said control means is provided in the base station.

7. A cell switching method **characterized by** comprising the steps of:
measuring a field intensity of a plurality of base stations adjacent to a base station servicing a mobile station;
switching, when the field intensity of a base station exceeds a reference intensity, to that base station for communication with the mobile station; and
controlling the time interval for field intensity measurement with respect to the base stations, taking into consideration an increasing or decreasing tendency of the field intensity with respect to the base stations.

8. The cell switching method according to claim 7, **characterized in that**:
the time interval for field intensity measurement with respect to a base station is reduced as the field intensity undergoes an increase, and the time interval for field intensity measurement with respect to the base station is extended as the field intensity undergoes a decrease.

9. The cell switching method according to claim 7, **characterized in that**:
the time interval for field intensity measurement with respect to the base stations is controlled, taking into consideration absolute values of the field intensity with respect to the base stations.

10. The cell switching method according to claim 9, **characterized in that**:
the time interval for field intensity measurement with respect to the base station is reduced as the absolute value of field intensity becomes large.

11. The cell switching method according to claim 7, **characterized in that**:
the time interval for field intensity measurement with respect to the base stations is controlled, taking into consideration a direction of movement of a satellite.
